# EUROPEAN PATENT APPLICATION

(11) **EP 4 791 019 A1**
(43) Date of publication of application: **12.08.2026**
(21) Application number: 26152587.7
(22) Date of filing: 19.01.2026
(51) Int. Cl.: H04N 23/80, H04N 23/81, H04N 19/00, H04N 19/137, H04N 19/182, H04N 19/85, G06T 5/00, G06T 7/00, G06T 7/254, G06T 9/00

(54) **VIDEO ENHANCER FOR CAMERA SYSTEMS**

(30) Priority: 11.02.2025 US 202519050187
(71) Applicant: Roku, Inc., San Jose, CA 95110 (US)
(72) Inventor: BROUILLETTE, Patrick Alan, San Jose, 95110 (US); RIISE, Soren, San Jose, 95110 (US); RAMESH, Sunil, San Jose, 95110 (US); GARNER, Gregory Mack, San Jose, 95110 (US); STERN, David Lee, San Jose, 95110 (US)
(74) Representative: Yang, Shu

(57) **Abstract**

Disclosed herein are system, apparatus, article of manufacture, method and/or computer program product aspects, and/or combinations and sub-combinations thereof, for enhancing images and/or videos captured by a camera. An example aspect operates by receiving, by at least one computer processor on the camera, a video frame including a first set of pixels. The method further includes performing the video processing on the first set of pixels to generate a second set of pixels before compressing or encoding the received video frame. The method further includes compressing the second set of pixels and causing the compressed second set of pixels to be displayed on a display device.

## Description

### BACKGROUND

This application claims priority to U.S. Non-Provisional application 19/050,187 filed on February 11, 2025, which is incorporated by reference herein in its entirety.

### FIELD

This disclosure is generally directed to video enhancer systems for a camera, and more particularly to video enhancer systems in a camera configured to process raw pixels captured by the camera before the raw pixels are encoded and/or compressed.

### SUMMARY

Provided herein are system, apparatus, article of manufacture, method and/or computer program product aspects, and/or combinations and sub-combinations thereof, for enhancing images and/or videos captured by a camera.

An example aspect operates by receiving, by at least one computer processor on the camera, a video frame including a first set of pixels. The method further includes performing the video processing on the first set of pixels to generate a second set of pixels before compressing or encoding the received video frame. The method further includes compressing the second set of pixels and causing the compressed second set of pixels to be displayed on a display device.

According to some aspects, the method further includes generating a reference frame based at least on one or more video frames received prior to the received video frame and determining a difference frame based on the reference frame and the received video frame. For each pixel of the difference frame, a difference value of the pixel is compared with a condition. In response to the condition being met, the method further includes generating the second set of pixels by updating a value of a corresponding pixel in the first set of pixels based on the difference value and a factor and updating a value of a neighboring pixel of the corresponding pixel in the first set of pixels.

According to some aspects, comparing the difference value of the pixel with the condition includes comparing the difference value of the pixel with a threshold. In response to the difference value being greater than or equal to the threshold, the method further includes updating the value of a corresponding pixel in the first set of pixels based on the difference value and the factor and updating the value of the neighboring pixel of the corresponding pixel in the first set of pixels.

According to some aspects, performing the video processing includes generating a reference frame based at least on a previous video frame received a predetermined time prior to the received video frame and determining a difference frame based on the reference frame and the received video frame. The method further includes, for each pixel of the difference frame, comparing a difference value of the pixel with a condition. In response to the condition being met, generating the second set of pixels by updating a value of a corresponding pixel in the first set of pixels based on the difference value and a factor and updating a value of a neighboring pixel of the corresponding pixel in the first set of pixels.

According to some aspects, performing the video processing includes receiving a sum frame, where the sum frame includes an addition of one or more video frames received prior to the received video frame. The method further includes updating the sum frame by subtracting an oldest video frame from the sum frame and adding the received video frame, where the oldest video frame includes a video frame with an oldest time index of the one or more video frames. The method further includes generating the second set of pixels by applying a transformation to the updated sum frame.

According to some aspects, the method further includes receiving a request to perform the video processing in the camera and transmitting the compressed second set of pixels to a user device to be displayed on the display device associated with the user device.

According to some aspects, the method further includes compressing the first set of pixels and transmitting the compressed first set of pixels and the compressed second set of pixels to a user device to be displayed on the display device associated with the user device.

An example aspect is a camera including one or more memories and at least one processor each coupled to at least one of the one or more memories. The at least one processor is configured to perform operations including receiving a video frame including a first set of pixels and performing the video processing on the first set of pixels to generate a second set of pixels before compressing or encoding the received video frame. The operations further include compressing the second set of pixels and causing the compressed second set of pixels to be displayed on a display device.

An example aspect is a non-transitory computer-readable medium having instructions stored thereon that, when executed by at least one computing device of a camera, cause the at least one computing device to perform operations including receiving a video frame including a first set of pixels and performing the video processing on the first set of pixels to generate a second set of pixels before compressing or encoding the received video frame. The operations further include compressing the second set of pixels and causing the compressed second set of pixels to be displayed on a display device.

### BRIEF DESCRIPTION OF THE FIGURES

The accompanying drawings are incorporated herein and form a part of the specification.
FIG. 1 illustrates a block diagram of a multimedia environment, according to some aspects.
FIG. 2 illustrates a block diagram of a streaming media device, according to some aspects.
FIG. 3 illustrates a block diagram of a camera environment, according to some aspects.
FIG. 4 illustrates a flowchart depicting a method for performing one or more video processing algorithms by a camera, according to some aspects.
FIG. 5 illustrates a flowchart depicting a method for requesting and displaying an enhanced video, according to some aspects.
FIG. 6A illustrates a flowchart depicting a method for performing the motion highlight algorithm or the comparison algorithm over longer time scale by a camera, according to some aspects.
FIG. 6B illustrates a flowchart depicting a method for performing the rolling stacking algorithm by a camera, according to some aspects.
FIG. 7A shows an exemplary illustration of the motion highlight algorithm, according to some aspects.
FIG. 7B, shows an exemplary illustration of the comparison algorithm over longer time scale, according to some aspects.
FIG. 7C, shows an exemplary illustration of the rolling stacking algorithm, according to some aspects.
FIG. 8 illustrates an example computer system useful for implementing various aspects.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product aspects, and/or combinations and sub-combinations thereof, for enhancing images and/or videos captured by a camera.

Some cameras (also herein referred to camera systems) have been used to detect features and/or monitor households. For example, such cameras have been placed within homes as well as outdoors to monitor activity related to a home. Additionally, some cameras (such as baby monitors, web cameras, or the like) are used for monitoring individuals and/or health related features. Such cameras, however, have limited capabilities and have limited success detecting different features in videos. Additionally, the level of detail that such camera systems may provide is often limited. For example, while a camera may capture videos in dark areas, the camera may not provide clear details in dark scenes. As another example, the camera may not provide clear details of objects that are moving slowly. For example, a camera monitoring a sleeping baby may not provide details of the movements of the baby's chest while the baby is breathing. As another example, the camera may not highlight changes in the scenes that are captured by the camera.

To address such limitations of the camera, aspects described herein describe a camera (also herein referred to a camera system) that uses video processing algorithms to enhance captured videos before the videos are displayed to user(s). According to some aspects, the video processing algorithms of this disclosure are performed within the camera. These algorithms are applied to raw pixels captured by the camera to enhance one or more aspects of the images and/or the videos captured by the camera.

According to some aspects, the video processing algorithms of this disclosure are applied in real time and in the camera before any additional image processing. For example, the video processing algorithms of this disclosure are applied to the pixels of images captured by the sensor of the camera and before, for example, the images are compressed and/or encoded. For example, the video processing algorithms of this disclosure are applied to the pixels of images captured by the sensor immediately after they have arrived at a memory on the camera (e.g., raw uncompressed pixels).

The video processing algorithms of this disclosure may be applied within less expensive and less sophisticated cameras that operate on battery. Additionally, or alternatively, the video processing algorithms of this disclosure may be applied within more sophisticated cameras that are connected to an electricity source. The video processing algorithms of this disclosure are high performance algorithms in the uncompressed space of the camera that use little computational resources. According to some aspects, the video processing algorithms of this disclosure may be used by one or more stationary cameras. The stationary camera may be a low power edge device. The stationary camera may be a battery-operated camera or a camera connected to an electricity source. Additionally, or alternatively, the video processing algorithms of this disclosure may be used by one or more moving cameras. A moving camera may be a battery-operated camera or a camera connected to an electricity source.

Although the video processing algorithms may be discussed herein with respect to videos (e.g., video frames), these algorithms may apply to images and/or videos captured by the camera.

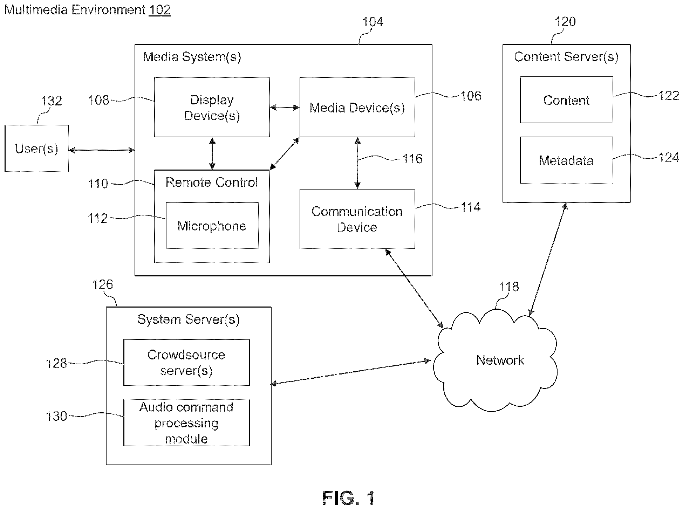

Various aspects of this disclosure may be implemented using and/or may be part of a multimedia environment 102 shown in FIG. 1. It is noted, however, that multimedia environment 102 is provided solely for illustrative purposes, and is not limiting. Aspects of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some aspects. In a non-limiting example, multimedia environment 102 may be directed to streaming media. However, this disclosure is applicable to any type of media (instead of or in addition to streaming media), as well as any mechanism, means, protocol, method and/or process for distributing media. For example, the multimedia environment 102 may implement and/or connect to one or more cameras. The streaming may include streaming video streams and/or camera feeds from the camera(s) to one or more display devices and/or user devices. According to some aspects, the user devices may include wireless communication devices, smart phones, laptops, desktops, tablets, personal assistants, monitors, televisions, wearable devices, gaming devices, Internet of Thing (IoT) devices.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content. This may include viewing video streams from one or more cameras.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. The media device 106 may include and/or be coupled to one or more cameras. Display device 108 may be a monitor, television (TV), computer, smart phone, tablet, wearable (such as a watch or glasses), appliance, internet of things (IoT) device, and/or projector, to name just a few examples. Media device 106 may be a part of, integrated with, operatively coupled to, and/or connected to its respective display device 108. One or more cameras may also communicate with and/or provide data to a display device 108.

Each media device 106 may be configured to communicate with network 118 via a communication device 114. The communication device 114 may include, for example, a cable modem or satellite TV transceiver. The media device 106 may communicate with the communication device 114 over a link 116, where the link 116 may include wireless (such as WiFi) and/or wired connections.

In various aspects, the network 118 may include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 may be any component, part, apparatus and/or method for controlling the media device 106 and/or display device 108, such as a remote control, a tablet, laptop computer, smartphone, wearable, on-screen controls, integrated control buttons, audio controls, or any combination thereof, to name just a few examples. In an aspect, the remote control 110 wirelessly communicates with the media device 106 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some aspects, metadata 124 includes data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

The multimedia environment 102 may include one or more system servers 126. The system servers 126 may operate to support the media devices 106 from the cloud. It is noted that the structural and functional aspects of the system servers 126 may wholly or partially exist in the same or different ones of the system servers 126.

The media devices 106 may exist in thousands or millions of media systems 104. Accordingly, the media devices 106 may lend themselves to crowdsourcing aspects and, thus, the system servers 126 may include one or more crowdsource servers 128.

For example, using information received from the media devices 106 in the thousands and millions of media systems 104, the crowdsource server(s) 128 may identify similarities and overlaps between closed captioning requests issued by different users 132 watching a particular movie. Based on such information, the crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 128 may operate to cause closed captioning to be automatically turned on and/or off during future streamings of the movie.

The system servers 126 may also include an audio command processing module 130. As noted above, the remote control 110 may include a microphone 112. The microphone 112 may receive audio data from users 132 (as well as other sources, such as the display device 108). In some aspects, the media device 106 may be audio responsive, and the audio data may represent verbal commands from the user 132 to control the media device 106 as well as other components in the media system 104, such as the display device 108.

In some aspects, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing. As further explained below, the user 132 may use the media system 104 to communicate with a camera such that the camera performs one or more of the video processing algorithms discussed in this disclosure. Additionally, or alternatively, the media system 104 may provide alerts to the user 132 based on the enhanced videos and/or alerts that the media system 104 receives from the camera.

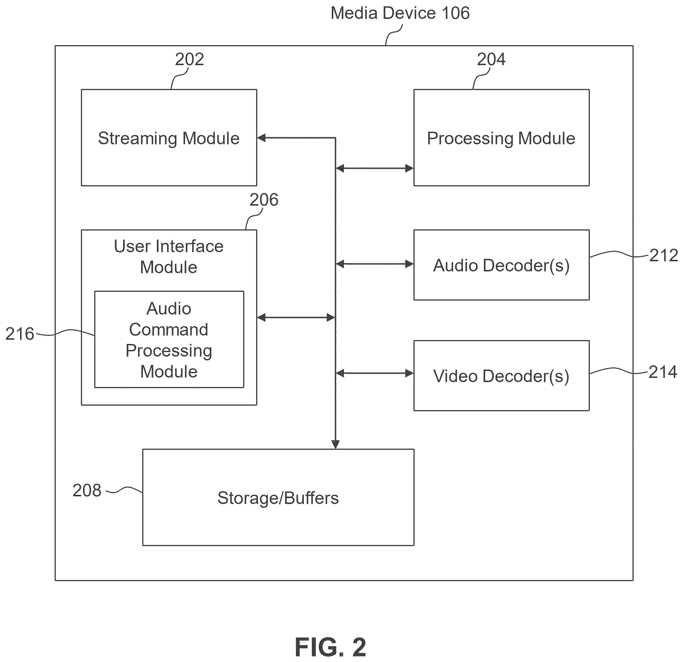

In some aspects, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

FIG. 2 illustrates a block diagram of an example media device 106, according to some aspects. Media device 106 may include a streaming module 202, processing module 204, storage/buffers 208, and user interface module 206. As described above, the user interface module 206 may include the audio command processing module 216. Media device 106 may interface with one or more cameras, may include one or more cameras, and/or may be included in one or more cameras.

The media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, AV1, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, AV1, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some aspects, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132. The content and/or playback may be a video generated by one or more cameras.

In streaming aspects, the streaming module 202 may transmit the content to the display device 108 in real time or near real time as it receives such content from the content server(s) 120. In non-streaming aspects, the media device 106 may store the content received from content server(s) 120 in storage/buffers 208 for later playback on display device 108.

### Camera with Video Processing Algorithms

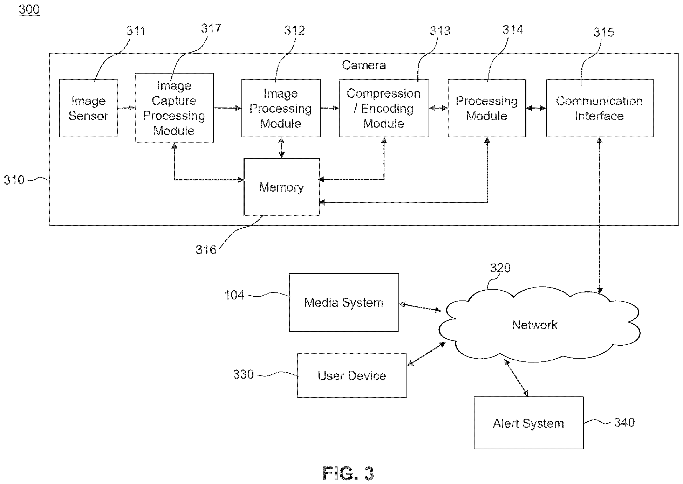

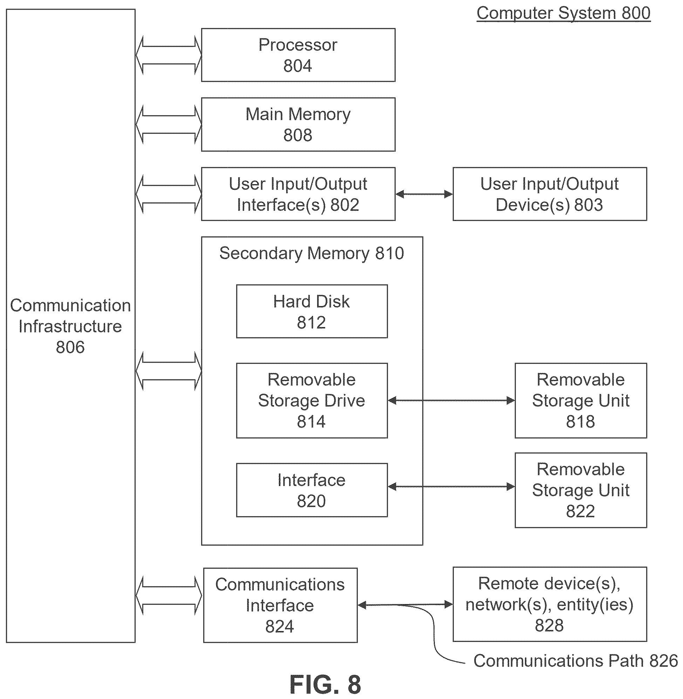

FIG. 3 illustrates a block diagram of a camera environment 300, according to some aspects. Camera environment 300 includes a camera 310, a media system 104, a network 320, a user device 330, and alert system 340. The camera 310 may include one or more cameras, processors, memories, and/or may implement aspects of computer system 800 as described with reference to FIG. 8.

Although one camera 310, one media system 104, one network 320, one user device 330, and one alert system 340 is illustrated in FIG. 3., the aspects of this disclosure are not limited to this example and any number of cameras 310, media systems 104, networks 320, user devices 330, and alert systems 340 may be used. Also, although the user device 330 is illustrated separately from the media system 104, the use device 330 may be part of the media system 104.

According to some aspects, the media system 104 and/or the user device 330 may interface with the camera 310. For example, the camera 310 is configured to capture videos and/or images, process the captured videos and/or images, and transmit the processed videos and/or images to the media system 104 and/or the user device 330 through the network 320. According to some aspects, network 320 may include any combination of routers, switches, access points, LANs, WANs, the Internet, network 118, and/or include wired and/or wireless communications.

The user device 330 may display the received videos and/or images to a user (e.g., the user 132 of FIG. 1) on a display device associated with the user device 330. The display device associated with the user device 330 may be a display of a smart phone, a display of a tablet, ad display of a computer, a display of a wearable device, a monitor, television (TV), another computer, another smart phone, another tablet, another wearable device (such as a watch or glasses), appliance, internet of things (IoT) device, and/or projector, to name just a few examples. Additionally, or alternatively, the media system 104 may display the received videos and/or images to a user (e.g., the user 132 of FIG. 1) on a display device associated with the media system 104. For example, the media device 106 may display the received videos and/or images to the user on the display device 108.

For brevity, some aspects of this disclosure are discussed with respect to videos captured by the camera 310 and the media system 104. However, the aspects of this disclosure similarly apply to images (and/or other data) captured by the camera 310 and also apply to the user device 330 (and/or other user devices).

According to some aspects, in addition to the videos (and/or images), the camera 310 may transmit other information associated with the videos (and/or images) to the media system 104 (and/or user device 330). For example, the camera 310 may be configured to analyze the captured and processed videos for any abnormality and may be configured to send an alert to the media system 104 based on the analysis. Additionally, or alternatively, the camera 310 may transmit the captured and processed videos to the alert system 340. The alert system 340 may analyze the received videos for any abnormality and may be configured to send an alert to the media system 104 based on the analysis.

According to some aspects, the media system 104 (and/or the user device 330) may communicate with the camera 310. For example, the media system 104 may transmit instructions and/or requests to the camera 310 to trigger the camera 310 to capture videos. Additionally, or alternatively, the media system 104 may transmit instructions and/or requests to the camera 310 to apply different video processing such as the video processing algorithms discussed herein. For example, the user 132 may use the media device 106 of the media system 104 (or may use the user device 330) to trigger the camera 310 to apply the video processing algorithms discussed herein. Additionally, or alternatively, the media system 104 may transmit instructions and/or requests to the camera 310 to set and/or change one or more parameters of the camera 310. The parameters of the camera 310 may include, but are not limited to, parameters associated to one or more lenses of the camera 310, movement parameters (e.g., to move the camera 310 to capture different scene), or the like. Additionally, or alternatively, the media system 104 may transmit instructions and/or requests to the camera 310 whether to further analyze the captured videos and whether to generate and transmit alerts. The media system 104 may transmit additional instructions and/or requests to the camera 310.

According to some aspects, in addition to or instead of using the media system 104 (and/or the user device 330), the user 132 may directly use the camera 310 to input instructions and/or requests discussed above.

According to some aspects, the camera 310 may include an image sensor 311, an image capture processing module 317, an image processing module 312, a compression/encoding module 313, a processing module 314, a communication interface 315, and a memory 316. According to some aspects, the image capture processing module 317, the image processing module 312, the compression/encoding module 313, and the processing module 314 can be modules on one or more processors configured to perform operations discussed herein. According to some aspects, the image capture processing module 317, the image processing module 312, the compression/encoding module 313, and the processing module 314 can be modules on the same processor configured to perform operations discussed herein. According to some aspects, the image capture processing module 317, the image processing module 312, the compression/encoding module 313, and the processing module 314 can be modules on different processors configured to perform operations discussed herein. According to some aspects, one or more of the image capture processing module 317, the image processing module 312, the compression/encoding module 313, or the processing module 314 can include one or more processors configured to perform operations discussed herein. However, the aspects of this disclosure are not limited to these examples, and camera 310 may include other systems and/or modules.

The camera 310 captures pixels (also referred herein as image pixels and/or video pixels) using the image sensor 311. The image sensor 311 may include any sensor that detects and conveys information used to form an image. For example, the image sensor 311 may be a charge-coupled device (CCD), an active-pixel sensor, or the like. The aspects of this disclosure are not limited to these examples and other image sensors may be used. The image sensor 311 may be coupled to one or more lenses, aperture elements, electronic sensors, or the like.

According to some aspects, the output of the image sensor 311 may include a first set of pixels including one or more pixels. At each time instant, the image sensor 311 may capture a frame (also referred herein as an image frame and/or a video frame). Each frame may include the first set of pixels. The captured pixels may be input to the image capture processing module 317. The image capture processing module 317 may process the output of the image sensor 311 (e.g., the first set of pixels) the output of the image sensor 311 streams in from the image sensor 311. The processing of the image capture processing module 317 can include color conversion, scaling, etc. The captured pixels and/or the processed captured pixels may be stored at the memory 316. For example, the captured pixels may be stored at the memory 316 through image capture processing module 317. The captured pixels may be directly stored at the memory 316, according to some aspects. Additionally, or alternatively, the captured pixels (and/or processed captured pixels processed by the image capture processing module 317) may be output to the image processing module 312 directly (e.g., directly from the image sensor 311 and/or from the image capture processing module 317) and/or indirectly (e.g., retrieved by the image processing module 312 from the memory 316). According to some aspects, the image processing module 312 may perform video processing on the captured pixels (and/or on processed captured pixels processed by the image capture processing module 317). For example, the image processing module 312 may perform one or more video processing algorithms of this disclosure.

According to some aspects, one of the video processing algorithms performed by the image processing module 312 may include a motion highlight algorithm configured to detect and highlight small motions in a video. The small motions within the video captured by the camera 310 are detected and further highlighted by the image processing module 312 for display to, for example, the user 132. Additionally, or alternatively, small motions within the video captured by the camera 310 are detected and further analyzed for detecting any abnormalities in the scene and/or the subject monitored by the camera 310.

In a non-limiting example, the camera 310 may be a baby monitoring camera for monitoring a baby. The motion highlight algorithm of the image processing module 312 may be configured to detect and highlight small motions in the video of a sleeping baby. The small motions may include the baby's chest movements when the baby is asleep. The motion highlight algorithm of the image processing module 312 may be configured to detect and highlight small motions of the chest movements to display the highlighted chest movements. Additionally, or alternatively, the motion highlight algorithm of the image processing module 312 (alone or in combination with processing module 314) may be configured to detect and highlight small motions and send the video with the highlighted motions to an analyzing system (e.g., the alert system 340) to monitor if abnormal movements (or a lack of movements) is detected that may signal potential problems with the baby. For example, the analyzing system (e.g., the alert system 340 and/or the processing module 314) may be configured to detect and determine lack of motion based on the results of the motion highlight algorithm of the image processing module 312.

In another non-limiting example, the motion highlight algorithm of the image processing module 312 may be configured to detect biometric information and cause the display of the detected biometric information. For example, the motion highlight algorithm of the image processing module 312 may be configured to detect heart rate, blood pressure, breathing rate, and other biometric information. The motion highlight algorithm of the image processing module 312 may be configured to cause display these detected biometric information over the captured video.

In another non-limiting example, the motion highlight algorithm of the image processing module 312 may be configured to detect seizure of a person (e.g., a subject of the monitoring) and cause the display of associated highlighted motions over the captured video. In another non-limiting example, the motion highlight algorithm of the image processing module 312 may be configured to be used as a sensor to detect and highlight motions in, for example, industrial settings.

It is noted that the aspects of this disclosure are not limited to these examples, and the motion highlight algorithm of the image processing module 312 and the other video processing algorithms discussed herein may be used for other applications.

According to some aspects, another video processing algorithm that may be performed by the image processing module 312 may include a rolling stacking algorithm (e.g., astrophotography stacks algorithm) configured to enhance the darker areas in the captured video. As discussed in more detail below, the rolling stacking algorithm of the image processing module 312 may enhance darker areas in the captured video to increase the resolution these darker areas for displaying to the user and/or for further analysis. According to some aspects, a darker area of a video may include one or more pixels where a parameter of each pixel in the one or more pixels satisfy a condition. For example, a grayscale value of the pixel may be more than a grayscale threshold for the pixel to be considered as the darker area.

It is noted that the aspects of this disclosure are not limited to these examples, and the rolling stacking algorithm of the image processing module 312 and the other video processing algorithms discussed herein may be used for other applications.

According to some aspects, another video processing algorithm that may be performed by the image processing module 312 may include comparison algorithms over longer time scale configured to detect and highlight small changes amongst different frames of a video. For example, if a person has walked on grass or gravel in a backyard, the comparison algorithms over longer time scale of the image processing module 312 may be configured to determine the changes on the grass or the gravels and highlight (through edge highlighting, blinking, or other comparisons) these changes in the video displayed to a user. According to some aspects, the time scale used for the comparison algorithms over longer time scale of the image processing module 312 may be 1 minute. According to some aspects, the time scale may be 1 hour. According to some aspects, the time scale may be 24 hours. However, the aspects of this disclosure are not limited to these examples and the time scale for the comparison algorithms over longer time scale of the image processing module 312 may include other time frames.

According to some aspects, the comparison algorithms over longer time scale of the image processing module 312 (alone or in combination with the processing module 314 and/or alert system 340) may be used to generate an alert if changes amongst different frames of the video are detected. For example, the camera 310 has not been able to detect a person moving across the backyard, but the comparison algorithms over longer time scale of the image processing module 312 (alone or in combination with the processing module 314 and/or alert system 340) may detect the small changes and generate an alert. According to some aspects, before generating the alert, the camera 310 and/or the alert system 340 may perform additional analysis to determine if the small changes are associated with events that may not need an alert. For example, the camera 310 and/or the alert system 340 may further analyze the video frames and determine the presence of an animal. The camera 310 and/or the alert system 340 may compare the determination of the presence of the animal with a database to determine that for such event (e.g., the presence of the animal) no alert is needed. Based on this determination, no alert is generated.

According to some aspects, the comparison algorithms over longer time scale of the image processing module 312 may be initiated by a request from the media system 104 and/or the user device 330 that displays the captured videos or a request directly to the camera 310. Additionally, or alternatively, the comparison algorithms over longer time scale of the image processing module 312 may be performed periodically. Additionally, or alternatively, the comparison algorithms over longer time scale of the image processing module 312 may be initiated after an event related to the camera 310 and/or the communication of the camera 310 with other devices. For example, if the camera 310 is attacked by a jamming attack (e.g., a jamming attack by, for example, a laser, infrared light, or the like), the jamming attack may be an event that triggers the comparison algorithms over longer time scale of the image processing module 312. In another non-limiting example, if the network 320 that connects the camera 310 to other devices (e.g., the media system 104 and/or the user device 330) is attacked by a jamming attack (e.g., a wireless jamming), the jamming attack may be an event that triggers the comparison algorithms over longer time scale of the image processing module 312.

Additionally, or alternatively, the comparison algorithms over longer time scale of the image processing module 312 may have a "blink" mode, which switches back and forth between "present" and "past" video frames. This mode may highlight objects that have been added or removed from the view of the camera 310. The comparison algorithms over longer time scale of the image processing module 312 may highlight the comparisons of two video frames over long time scales. The two video frames may include a first video frame (e.g., a past video frame) and a second video frame (e.g., a current/present video frame). The camera 310 (e.g., the processing module 314 of the camera 310) may receive a request from a user of the media system 104 and/or the user device 330 to activate a mode (e.g., the "blink" mode) of the comparison algorithms over longer time scale of the image processing module 312. In response to the request, the camera 310 (e.g., the processing module 314 of the camera 310) may switch back and forth between the first video frame and the second video frame to highlight the objects that have been added or removed from the view of the camera 310 between the first video frame and the second video frame.

The video processing algorithms of the image processing module 312 of this disclosure allow the user (e.g., the user 132) better perception of small motions in the videos and/or) better perception of dark scenes in the videos.

Although some aspects of the video processing algorithms of the image processing module 312 are discussed with respect to monitoring cameras (e.g., security cameras), these video processing algorithms may also be applied to cameras used for generating content. For example, the video processing algorithms of the image processing module 312 of this disclosure may be applied in real-time to different contents. For example, the video processing algorithms of the image processing module 312 may be applied to cameras recording content such as live sports. For example, the motion highlight algorithm of the image processing module 312 may be used to highlight the motions of a hockey puck in a hockey games. In another example, the motion highlight algorithm of the image processing module 312 may be used to highlight muscle movements of basketball players in a basketball game. The video processing algorithms of the image processing module 312 may be applied to other content too.

According to some aspects, the output of the image processing module 312 may include a second set of pixels including one or more enhanced pixels that are generated from the first set of pixels output of the image sensor 311. The enhanced pixels are enhanced by one or more of the motion highlight algorithm, the rolling stacking algorithm, and the comparison algorithm over longer time scale of the image processing module 312. For example, the enhanced pixels are enhanced by the motion highlight algorithm of the image processing module 312. For example, the enhanced pixels are enhanced by the rolling stacking algorithm of the image processing module 312. For example, the enhanced pixels are enhanced by the comparison algorithm over longer time scale of the image processing module 312. For example, the enhanced pixels are enhanced by the combination of the motion highlight algorithm and the rolling stacking algorithm of the image processing module 312. For example, the enhanced pixels are enhanced by the combination of the rolling stacking algorithm and the comparison algorithm over longer time scale of the image processing module 312.

According to some aspects, the second set of pixels including the enhanced pixels may be stored in memory 316. The processing module 314 may access the second set of pixels for additional analysis for generating an alert as discussed above. According to some aspects, the analysis algorithms for analyzing the video generated by the video processing algorithms of the image processing module 312 may be located at the processing module 314 of the camera 310 such that the second set of pixels may be analyzed on-site (in the camera 310) before the second set of pixels are post-processed and sent outside of the camera 310.

Additionally, or alternatively, the second set of pixels may be compressed and/or encoded using the compression/encoding module 313. The compression/encoding module 313 prepares the second set of pixels for transmission to the media system 104 and/or the use device 330. The compressed second set of pixels may be further processed using the processing module 314, if needed. According to some aspects, the processing module 314 may access the compressed second set of pixels for the additional analysis for generating an alert as discussed above. According to some aspects, the analysis algorithms for analyzing the video generated by the video processing algorithms of the image processing module 312 may be located at the processing module 314 of the camera 310 such that the compressed second set of pixels may be analyzed on-site (in the camera 310) before the compressed second set of pixels are transmitted outside of the camera 310.

As discussed above, in addition to or alternatively to the processing module 314, the alert system 340 may include the analysis algorithms for analyzing the video generated by the video processing algorithms of the image processing module 312.

According to some aspects, the compression/encoding module 313 that operates on the enhanced videos (e.g., the second set of pixels including the enhanced pixels) may be adapted based on the enhanced pixels. For example, the enhanced pixels of the second set of pixels that are enhanced using the video processing algorithms of the image processing module 312 may be further compressed and/or encoded with higher resolution and/or higher bit rate compared to the rest of the pixels of the second set of pixels that are not enhanced using the video processing algorithms. In a non-limiting example, for the second set of pixels that includes motion highlighted pixels, the other pixels (e.g., the pixels that are not motion highlighted) may be blurred. Therefore, the motion highlighted pixels may be compressed and/or encoded with higher resolution and/or higher bit rate.

According to some aspects, the compression/encoding module 313 may be part of the processing module 314. Additionally, or alternatively, the compression/encoding module 313 may be part of one or more processors that include one or more of image capture processing module 317 or image processing module 312.

The compressed second set of pixels are then transmitted using the communication interface 315 to the media system 104 and/or the user device 330 using the network 320. The communication interface 315 enables the camera 310 to communicate and interact with any combination of remote devices, remote networks, remote entities, etc. The communication interface 315 may be similar to communication interface 824 as described with reference to FIG. 8.

According to some aspects, the camera 310 may generate and output two stream of videos. The first video stream may include the compressed second set of pixels that include the enhanced pixels (e.g., an enhanced video enhanced using the video processing algorithms of the image processing module 312). The second video stream may include compressed first set of pixels (e.g., the original video without the enhancements of the video processing algorithms of the image processing module 312). For generating the second video stream, the first set of pixels that are stored in the memory 316 may be retrieved by the compression/encoding module 313 without going through the image processing module 312. The compression/encoding module 313 may compress the first set of pixels. The first set of pixels may be transmitted as the second video stream using the communication interface 315.

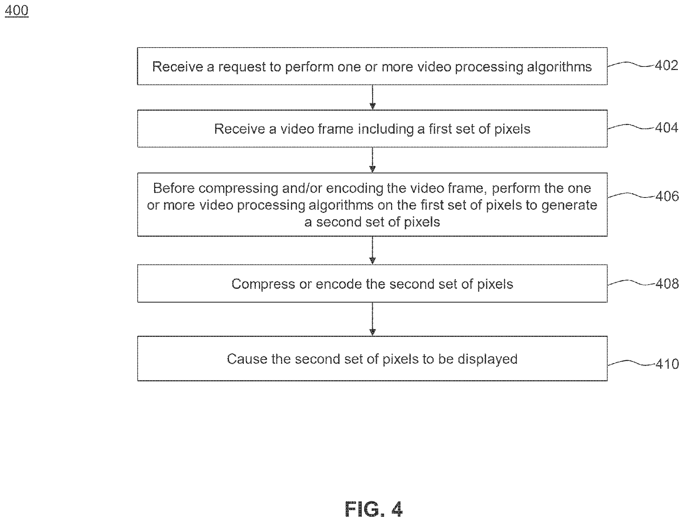

FIG. 4 illustrates a flowchart depicting a method 400 for performing one or more video processing algorithms by a camera, according to some aspects. Method 400 may be performed by processing logic that may include hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art.

Method 400 shall be described with reference to FIG. 3. However, method 400 is not limited to that example aspect. While method 400 is described with reference to the camera 310, method 400 may be executed on any computing device, such as, for example, the computer system described with reference to FIG. 8 and/or processing logic that may include hardware (e.g., circuitry, dedicated logic, programmable logic, microcode, etc.), software (e.g., instructions executing on a processing device), or a combination thereof.

At 402, a request to perform one or more video processing received. For example, the camera 310 may receive a request to perform one or more video processing algorithms including one or more of the motion highlight algorithm, the rolling stacking algorithm, or the comparison algorithm over longer time scale of the image processing module 312. According to some aspects, the processing module 314 of the camera 310 may receive the request from the media system 104 and/or the user device 330 through network 320 and communication interface 315. The processing module 314 may enable the image processing module 312 to perform one or more of the motion highlight algorithm, the rolling stacking algorithm, or the comparison algorithm over longer time scale.

At 404, a video frame including a first set of pixels is received. For example, the image processing module 312 may receive the video frame from the image sensor 311, the image capture processing module 317, and/or the memory 316. The first set of pixels may include the first set of pixels directly from the image sensor 311. Additionally, or alternatively, the first set of pixels may include the first set of pixels from the memory 316 (e.g., processed by the image capture processing module 317 and then stored in the memory 316, where the processing of the first set of pixels may include color conversion, scaling, or the like). Additionally, or alternatively, the first set of pixels may include processed first set of pixels directly from the image capture processing module 317 where the processing of the first set of pixels may include color conversion, scaling, or the like.

At 406, before compressing and/or encoding the video frame, the one or more video processing algorithms is performed on the first set of pixels (and/or the processed first set of pixels processed by the image capture processing module 317) to generate a second set of pixels. For example, the image processing module 312 may perform the motion highlight algorithm on the first set of pixels to generate the second set of pixels. For example, the image processing module 312 may perform the rolling stacking algorithm on the first set of pixels to generate the second set of pixels. For example, the image processing module 312 may perform the comparison algorithm over longer time scale on the first set of pixels to generate the second set of pixels. For example, the image processing module 312 may perform the motion highlight algorithm and the rolling stacking algorithm on the first set of pixels to generate the second set of pixels. For example, the image processing module 312 may perform the comparison algorithm over longer time scale and the rolling stacking algorithm on the first set of pixels to generate the second set of pixels. The image processing module 312 performs these algorithms before compressing and/or encoding the video frame. Although exemplary algorithms are discussed as examples of the one or more enhancement video processing algorithms, other enhancement video processing algorithms may be used herein on the raw pixels captured by the image sensor before these raw pixels are compressed and/or encoded using the compression/encoding module 313.

At 408, the second set of pixels are compressed and/or encoded. For example, the compression/encoding module 313 may compress and/or encode the second set of pixels for transmitting the compressed second set of pixels to the media system 104 and/or the user device 330. At 410, the compressed second set of pixels are caused to be displayed on a display device. For example, the media system 104 and/or the user device 330 displays the compressed second set of pixels on a display device associated with the media system 104 and/or the user device 330.

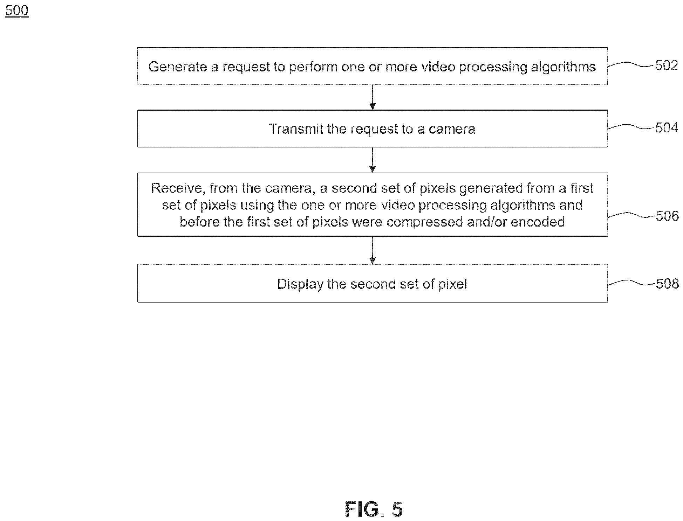

FIG. 5 illustrates a flowchart depicting a method 500 for requesting and displaying an enhanced video, according to some aspects. Method 500 may be performed by processing logic that may include hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art.

Method 500 shall be described with reference to FIGS. 3 and 4. However, method 500 is not limited to that example aspect. While method 500 is described with reference to the camera 310, the media system 104, and/or the user device 330, method 500 may be executed on any computing device, such as, for example, the computer system described with reference to FIG. 8 and/or processing logic that may include hardware (e.g., circuitry, dedicated logic, programmable logic, microcode, etc.), software (e.g., instructions executing on a processing device), or a combination thereof.

At 502, a request to perform one or more video processing is generated. For example, the media system 104 and/or the user device 330 may generate a request to perform one or more video processing algorithms including one or more of the motion highlight algorithm, the rolling stacking algorithm, or the comparison algorithm over longer time scale.

At 504, the request is transmitted to a camera. For example, the media system 104 and/or the user device 330 may transmit the request to the camera 310. For example, the media system 104 and/or the user device 330 may transmit the request to the processing module 314 of the camera 310 through network 320 and communication interface 315.

At 506, a second set of pixels is received. For example, the media system 104 and/or the user device 330 may receive the second set of pixels from the camera 310. The second set of pixels are generated from a first set of pixels using the one or more video processing algorithms and before the first set of pixels were compressed and/or encoded. For example, the second set of pixels are generated from the first set of pixels using the motion highlight algorithm. For example, the second set of pixels are generated from the first set of pixels using the rolling stacking algorithm. For example, the second set of pixels are generated from the first set of pixels using the comparison algorithm over longer time scale. For example, the second set of pixels are generated from the first set of pixels using the motion highlight algorithm and the rolling stacking algorithm. For example, the second set of pixels are generated from the first set of pixels using the comparison algorithm over longer time scale and the rolling stacking algorithm. Although exemplary algorithms are discussed as examples of the one or more enhancement video processing algorithms, other enhancement video processing algorithms may be used herein on the raw pixels captured by the image sensor before these raw pixels are compressed and/or encoded.

At 508, the second set of pixels are displayed on a display device. For example, the media system 104 and/or the user device 330 displays the second set of pixels on a display device associated with the media system 104 and/or the user device 330.

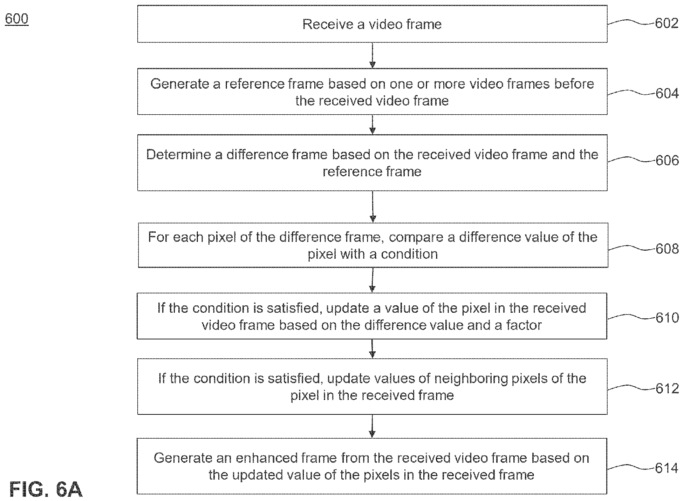

FIG. 6A illustrates a flowchart depicting a method 600 for performing the motion highlight algorithm or the comparison algorithm over longer time scale by a camera, according to some aspects. Method 600 may be performed by processing logic that may include hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 6A, as will be understood by a person of ordinary skill in the art.

Method 600 shall be described with reference to FIGS. 3-5, 7A, and 7B. However, method 600 is not limited to that example aspect. While method 600 is described with reference to the camera 310, and more specifically the image processing module 312, method 600 may be executed on any computing device, such as, for example, the computer system described with reference to FIG. 8 and/or processing logic that may include hardware (e.g., circuitry, dedicated logic, programmable logic, microcode, etc.), software (e.g., instructions executing on a processing device), or a combination thereof.

According to some aspects, method 600 may be part of operation 406 of FIG. 4.

At 602, a video frame is received. For example, the image processing module 312 may receive a video frame. The image processing module 312 may receive the video frame from image sensor 311. Additionally, or alternatively, the image processing module 312 may receive the video frame from the memory 316. The video frame may include a first set of pixels.

At 604, a reference frame (e.g., a reference video frame) is generated based on one or more video frames captured before the video frame received at 602. For example, the image processing module 312 may generate the reference frame. Additionally, or alternatively, the reference frame is stored at the memory 316, the image processing module 312 retrieves the reference frame, and the image processing module 312 updates the reference frame. According to some aspects, the image processing module 312 may generate the reference frame as an average of one or more video frames captured before the video frame received at 602.

According to some aspects, at each given time (e.g., T₀) where the video frame is received (operation 602), the reference frame may be an average of a plurality of prior video frames in time. In some aspects, the reference frame may be an average of a plurality of consecutive prior video frames in time (e.g., T₋₁ ... T₋ₙ). In some aspects, the reference frame may be an average of a plurality of non-consecutive prior video frames in time. In a non-limiting example, a reference frame may be an average of the last four video frames (consecutive or non-consecutive) in time. But the aspects of this disclosure are not limited these examples, and other number of video frames may be used to generate the reference frame. The reference frame may be generated as a moving average of prior reference frames.

According to some aspects, each pixel of the reference frame is generated by averaging the corresponding pixel of the plurality of prior video frames over time. For example, each value of each pixel of the reference frame is generated by averaging the corresponding value of the corresponding pixel of the plurality of prior video frames over time.

According to some aspects, the value of a pixel may include an RGB value. Each pixel may be defined by its red, green, and blue intensity levels, usually expressed as integers between 0 and 255. Additionally, or alternatively, the value of the pixel may include a grayscale value that represents the intensity level of a pixel (from black to white). Additionally, or alternatively, the value of the pixel may include a pixel depth defined as a number of bits used to store the color information for each pixel. Additionally, or alternatively, the value of the pixel may include pixel aspect ratio defining a ratio of the width of a pixel to its height. Additionally, or alternatively, the value of the pixel may include an image format that describe a specific way an image stores pixel data. However, the value of each pixel may include other information associated with the pixel.

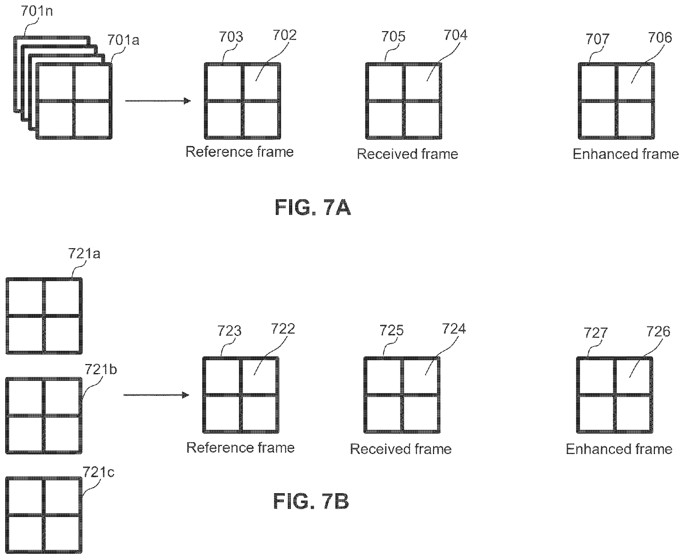

Referring to FIG. 7A, which shows an exemplary illustration of the motion highlight algorithm, one or more video frames 701a - 701n are illustrated that are received (e.g., captured) by the image sensor 311 of the camera 310. The video frames 701a - 701n are received before the current video frame 705 (e.g., the video frame received at operation 602) and may have been stored at the memory 316. The reference frame 703 is generated by averaging the video frames 701a - 701n. For example, for each pixel 702 of the reference frame 703, a corresponding value of the corresponding pixel of the video frames 701a - 701n are averaged (e.g., added and then divided by the number of video frame). The aspects of this disclosure are not limited to the exemplary frames and pixels illustrated in FIG. 7A.

At 606, a difference frame is determined based on the received video frame and the reference frame. For example, the image processing module 312 may determine a difference frame (a difference video frame) based on the received video frame and the reference frame. For example, for each pixel of the difference frame, one or more difference values are determined as the difference between the one or more values of that pixel in the received video frame (received at 602) and the one or more values of that pixel in the reference frame. For example, for each pixel of the difference frame, one difference value is determined as the difference between the value of that pixel in the received video frame (received at 602) and the value of that pixel in the reference frame.

For example, and referring to FIG. 7A, for each pixel of the difference frame, one difference value is determined as the difference between the value of that pixel (e.g., the pixel 704) in the received video frame 705 (received at 602) and the value of that pixel 702 in the reference frame 703.

Although determining the difference frame is provided as one example for comparing the received video frame (received at 602) with the reference frame, other methods may be used to compare the received video frame (received at 602) with the reference frame.

At 608, for each pixel of the difference frame, a difference value of the pixel is compared with a condition. For example, the image processing module 312 may compare the difference value of the pixel in the difference frame with a condition. For example, the image processing module 312 may compare the difference value of the pixel in the difference frame with a motion highlight threshold.

At 610, if the condition is satisfied, a value of the pixel in the received video frame is updated based on the difference value and a factor. For example, if the condition is satisfied, the image processing module 312 may update a value of the pixel in the received video frame based on the difference value and a factor (e.g., a motion highlight factor). According to some aspects, in response to the difference value being greater than or equal to the motion highlight threshold, the image processing module 312 may update the value of the pixel in the received video frame based on the difference value and the factor (e.g., a motion highlight factor).

According to some aspects, update the value of the pixel in the received video frame based on the difference value and the factor may include multiplying the difference value of multiplied by the factor and adding the results to the pixel in the received video frame. This process may be performed for each pixel of the received video frame. These pixels with updated value are also referred in as highlighted pixels.

At 612, if the condition is satisfied, values of neighboring pixels of the pixel in the received video frame are also updated. For example, if the condition is satisfied, the image processing module 312 may update values of neighboring pixels of the pixel in addition to updating the value of the pixel in the received video frame.

In other words, according to some aspects, in addition to highlighting the pixel that meets the condition as discussed above, one or more neighboring pixels of the highlighted pixel are also highlighted. In these aspects, method 600 may further include determining one or more neighboring pixels of the highlighted pixel. The difference value multiplied by the motion highlight factor (used for the highlighted pixel) are also added to the value(s) of the one or more neighboring pixels to generate the second enhanced frame. Alternatively, the value of the one or more neighboring pixels is set to the value of the highlighted pixel. Alternatively, the value of the one or more neighboring pixels is set as a function of the value of the highlighted pixel.

In addition to the one or more neighboring pixels, neighboring pixels of the one or more neighboring pixels may also be highlighted using the similar method. Additionally, or alternatively, the neighboring pixels of the one or more neighboring pixels may be highlighted but less than the one or more neighboring pixels. In other words, the factor used for highlighting the neighboring pixels of the one or more neighboring pixels may be smaller than the factor used for highlighting the one or more neighboring pixels.

Although operations 610 and 612 are discussed as a two-pass process for explanation, the process may be performed as a one-pass process.

If the difference value for the pixel does not meet the condition (e.g., is less than the motion highlight threshold), the value of that pixel in the received video frame is not changed.

At 614, an enhanced frame is generated from the received video frame based on the updated value of the pixels in the received video frame. For example, the image processing module 312 generates the enhanced frame from the received video frame based on the updated value of the pixels (e.g., the highlighted pixel). The enhanced frame includes a second set of pixels based on the updated value of the first set of pixels in the received video frame. Referring to FIG. 7A, the enhanced frame 707 including pixels 706 having updated values are generated. The enhanced frame (e.g., the enhanced frame 707) may go through operations 408 and 410 to be displayed to on a display device.

According to some aspects, the motion highlight algorithm of method 600 may be repeated during time where a moving average of past video frames is determined as the reference frame and the video frame at a present time is compared to the reference frame as discussed above. In some aspects, the video frames used for generating the moving average of past video frames are the raw video frames (e.g., non-enhanced video frames using the motion highlight algorithm). Additionally, or alternatively, the video frames used for generating the moving average of past video frames are a combination of the raw video frames and video frames enhanced using the motion highlight algorithm.

According to some aspects, method 600 may be used as the comparison algorithm over longer time scale in addition to, or alternatively to, the motion highlight algorithm. For example, for the comparison algorithm over longer time scale, at 604, the reference frame (e.g., a reference video frame) may be generated based on one or more video frames captured before the video frame received at 602. For example, the image processing module 312 may generate the reference frame based on, for example, one or more video frames captured before the video frame received at 602. Additionally, or alternatively, the reference frame is stored at the memory 316, the image processing module 312 retrieves the reference frame, and the image processing module 312 updates the reference frame. However, according to some aspects, for the comparison algorithm over longer time scale, the reference frame is not an average of the one or more video frames captured before the video frame received at 602.

According to some aspects, the comparison algorithm over longer time scale may be based on the motion highlight algorithm that is applied over a longer time scale. As a non-limiting example, at any given time (e.g., T₀), a video frame corresponding to 60 seconds ago (T₋₆₀ₛ), a video frame corresponding to an hour ago (e.g., T₋₁ₕᵣ), and a video frame corresponding to one day ago (e.g., T₋₂₄ₕᵣ) are stored in the memory 316 of the camera 310. The comparison algorithm over longer time scale may apply the motion highlight algorithm of method 600 for the video frame at the present time (e.g., T₀) to each of the frame corresponding to 60 seconds ago (T₋₆₀ₛ), the video frame corresponding to an hour ago (e.g., T₋₁ₕᵣ), and the video frame corresponding to one day ago (e.g., T₋₂₄ₕᵣ) to detect and highlight small changes amongst different frames of a video. In other words,

According to some aspects, in the comparison algorithm over longer time scale, by comparing the present video frame (the received video frame) with the stored frames, the image processing module 312 may determine the changes in the video frame (e.g., objects added, objects removed, objects moved, etc.) and the image processing module 312 may highlight these changes in the enhanced video frames that are displayed. Although three example past video frames are discussed above for the comparison algorithms over longer time scale, other number of video frames may be used. Also, although three example past time points are discussed above for the comparison algorithms over longer time scale, other past points in time may be used.

Referring to FIG. 7B, which shows an exemplary illustration of the comparison algorithm over longer time scale, one or more video frames 721a - 721c are illustrated that are received (e.g., captured) by the image sensor 311 of the camera 310. The video frames 721a - 721c are received before the current video frame 725 (e.g., the video frame received at operation 602) and may have been stored at the memory 316. The reference frame 723 is generated from the video frames 721a - 721c. For example, for each pixel 722 of the reference frame 723, a corresponding value of the corresponding pixel of the video frames 721a - 721c is used. The aspects of this disclosure are not limited to the exemplary frames and pixels illustrated in FIG. 7B.

Operations 606-614 of method 600 are similarly performed for the comparison algorithm over longer time scale to generate the enhanced frame 727 including pixels 726 having updated values. The enhanced frame (e.g., the enhanced frame 727) may go through operations 408 and 410 to be displayed to on a display device.

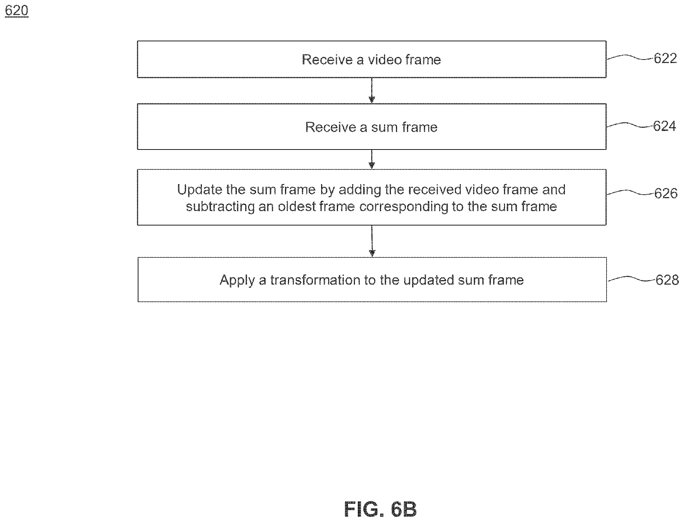

FIG. 6B illustrates a flowchart depicting a method 620 for performing the rolling stacking algorithm by a camera, according to some aspects. Method 620 may be performed by processing logic that may include hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 6B, as will be understood by a person of ordinary skill in the art.

Method 600 shall be described with reference to FIGS. 3-5, and 7C. However, method 620 is not limited to that example aspect. While method 620 is described with reference to the camera 310, and more specifically the image processing module 312, method 620 may be executed on any computing device, such as, for example, the computer system described with reference to FIG. 8 and/or processing logic that may include hardware (e.g., circuitry, dedicated logic, programmable logic, microcode, etc.), software (e.g., instructions executing on a processing device), or a combination thereof.

According to some aspects, method 620 may be part of operation 406 of FIG. 4.

At 622, similar to operation 602, a video frame is received. For example, the image processing module 312 may receive a video frame. The image processing module 312 may receive the video frame from image sensor 311. Additionally, or alternatively, the image processing module 312 may receive the video frame from the memory 316. The video frame may include a first set of pixels.

At 624, a sum frame is received. For example, the image processing module 312 may receive a sum frame (e.g., a sum video frame, also referred herein as a stacked frame or a stacked video frame). The image processing module 312 may receive the sum frame from image sensor 311. Additionally, or alternatively, the image processing module 312 may receive the sum frame from the memory 316.

At each given time (e.g., T₀ when the video frame is received at 622), the sum frame exists as a mathematical summation of a plurality of past video frames in time. In some aspects, the sum frame may be the sum of a plurality of consecutive past video frames in time (e.g., T₋₁ ... T₋ₙ). In some aspects, the sum frame may be the sum of a plurality of non-consecutive past video frames in time. According to some aspects, each pixel of the sum frame is generated by adding the corresponding pixel of the plurality of past video frames over time. For example, each value of each pixel of the sum frame is generated by adding the corresponding value of the corresponding pixel of the plurality of past video frames over time. In some aspects, each pixel of the plurality of pixels has 8 bits and the corresponding pixel of the sum frame has 16 bits. In some aspects, the sum frame may include an addition of up to 255 video frames.

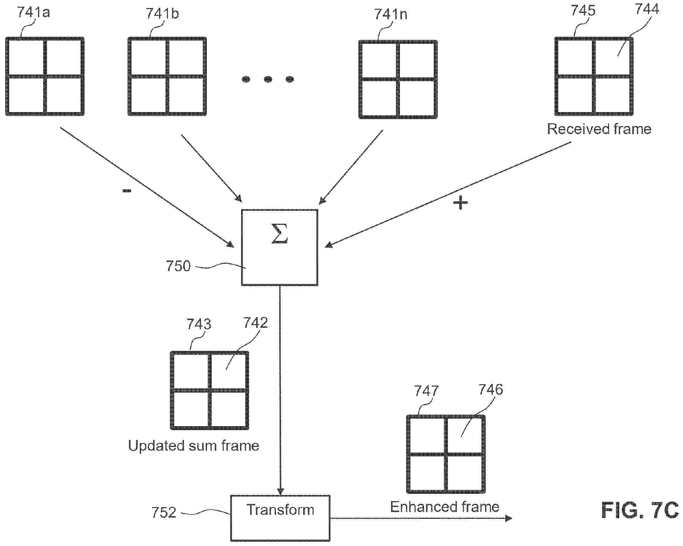

Referring to FIG. 7C, which shows an exemplary illustration of the rolling stacking algorithm, a sum frame may include a sum of the one or more video frames 741a - 741n that were received (e.g., captured) by the image sensor 311 of the camera 310 before the video frame 745 that is received at 622. The video frames 741a - 741n and/or the sum frame (the sum of the video frames 741a - 741n) may have been stored at the memory 316. The aspects of this disclosure are not limited to the exemplary frames and pixels illustrated in FIG. 7B.

At 626, the sum frame is updated. For example, the image processing module 312 may update the sum frame. According to some aspects, the image processing module 312 may update the sum frame by adding the received video frame and subtracting an oldest video frame corresponding to the sum frame. The oldest video frame may include a video frame with an oldest time index of the one or more video frames.

According to some aspects, at a given time T₀ when a new video frame F₀ is received (e.g., operation 622), the sum frame is updated by deducting the last video frame (e.g., frame F₋ₙ from time T₋ₙ) from the sum frame and adding the new video frame (e.g., F₀) to the sum frame. According to some aspects, adding (or subtracting) frames include, for each pixel of the frames, adding (or subtracting) the value of the corresponding pixels of the frames.

The sum frame has a high resolution. According to some aspects, dark pixels (e.g., pixels with a low value (such as a low grayscale value - a grayscale value less than a threshold) have noise. By adding these dark pixels in the sum frame, the noise may average out and therefore, the resolution of the dark pixels may improve such that a more clear image may be displayed to the user. Additionally, gain transform and/or gama transform may be applied to sum frame to increase the resolution of the sum frame and present a more clear image to the user. Also, the sum frame may be compressed better than the original frames as the noise has been significantly reduced in the sum frame. According to some aspects, the sum frame may remove moving objects (e.g., rain, snow, etc.) that are captured in the plurality of frame.

For example, referring to FIG. 7C, the updated sum frame 743 is generated by subtracting the oldest video frame 741a from the sum frame and adding the new video frame 745. The oldest video frame 741a may include a video frame with an oldest time index of the one or more video frames. For example, the value of the pixel 742 of the updated sum frame 743 is determined (e.g., generated by the summation 750) by deducting the value of the corresponding pixel of the video frame 741a from the value of the corresponding pixel of the sum frame and adding the value of the corresponding pixel 744 of the video frame 745.

At 628, an enhanced video frame including a second set of pixels is generated. For example, the image processing module 312 generate the enhanced video frame that includes the second set of pixels. According to some aspects, generating the enhanced video frame including the second set of pixels includes applying a transformation to the updated sum frame. According to some aspects, the sum frame is passed through a transformation where the 16-bit pixels of the sum frame are transformed to 8-bit pixels to generate the enhanced frame that is output for display. Additionally, or alternatively, the transformation may include modifying the transform curve of the sum frame (e.g., the gain, gamma, etc. of the sum frame's pixels) to generate the enhanced frame.

For example, referring to FIG. 7C, the updated sum frame 743 is passed through transform 752 to generate the enhanced frame 747 including the pixel 746. The enhanced frame (e.g., the enhanced frame 747) may go through operations 408 and 410 to be displayed to on a display device.

### Example Computer System

Various aspects may be implemented, for example, using one or more well-known computer systems, such as computer system 800 shown in FIG. 8. For example, the media device 106 may be implemented using combinations or sub-combinations of computer system 800. Also or alternatively, one or more computer systems 800 may be used, for example, to implement any of the aspects discussed herein, as well as combinations and sub-combinations thereof.

Computer system 800 may include one or more processors (also called central processing units, or CPUs), such as a processor 804. Processor 804 may be connected to a communication infrastructure or bus 806.

Computer system 800 may also include user input/output device(s) 803, such as monitors, keyboards, pointing devices, etc., which may communicate with communication infrastructure 806 through user input/output interface(s) 802.

One or more of processors 804 may be a graphics processing unit (GPU). In an aspect, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 800 may also include a main or primary memory 808, such as random access memory (RAM). Main memory 808 may include one or more levels of cache. Main memory 808 may have stored therein control logic (i.e., computer software) and/or data.

Computer system 800 may also include one or more secondary storage devices or memory 810. Secondary memory 810 may include, for example, a hard disk drive 812 and/or a removable storage device or drive 814. Removable storage drive 814 may be a floppy disk drive, a magnetic tape drive, a compact disk drive, an optical storage device, tape backup device, and/or any other storage device/drive.

Removable storage drive 814 may interact with a removable storage unit 818. Removable storage unit 818 may include a computer usable or readable storage device having stored thereon computer software (control logic) and/or data. Removable storage unit 818 may be a floppy disk, magnetic tape, compact disk, DVD, optical storage disk, and/ any other computer data storage device. Removable storage drive 814 may read from and/or write to removable storage unit 818.

Secondary memory 810 may include other means, devices, components, instrumentalities or other approaches for allowing computer programs and/or other instructions and/or data to be accessed by computer system 800. Such means, devices, components, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 800 may further include a communication or network interface 824. Communication interface 824 may enable computer system 800 to communicate and interact with any combination of external devices, external networks, external entities, etc. (individually and collectively referenced by reference number 828). For example, communication interface 824 may allow computer system 800 to communicate with external or remote devices 828 over communications path 826, which may be wired and/or wireless (or a combination thereof), and which may include any combination of LANs, WANs, the Internet, etc. Control logic and/or data may be transmitted to and from computer system 800 via communication path 826.

Computer system 800 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 800 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 800 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

A tangible, non-transitory apparatus or article of manufacture including a tangible, non-transitory computer useable or readable medium having control logic (software) stored thereon may also be referred to herein as a computer program product or program storage device. This includes, but is not limited to, computer system 800, main memory 808, secondary memory 810, and removable storage units 818 and 822, as well as tangible articles of manufacture embodying any combination of the foregoing. Such control logic, when executed by one or more data processing devices (such as computer system 800 or processor(s) 804), may cause such data processing devices to operate as described herein.

Based on the teachings contained in this disclosure, it will be apparent to persons skilled in the relevant art(s) how to make and use aspects of this disclosure using data processing devices, computer systems and/or computer architectures other than that shown in FIG. 8. In particular, aspects may operate with software, hardware, and/or operating system implementations other than those described herein.

### Conclusion

It is to be appreciated that the Detailed Description section, and not any other section, is intended to be used to interpret the claims. Other sections may set forth one or more but not all exemplary aspects as contemplated by the inventor(s), and thus, are not intended to limit this disclosure or the appended claims in any way.

While this disclosure describes exemplary aspects for exemplary fields and applications, it should be understood that the disclosure is not limited thereto. Other aspects and modifications thereto are possible, and are within the scope and spirit of this disclosure. For example, and without limiting the generality of this paragraph, aspects are not limited to the software, hardware, firmware, and/or entities illustrated in the figures and/or described herein. Further, aspects (whether or not explicitly described herein) have signifimayt utility to fields and applications beyond the examples described herein.

Aspects have been described herein with the aid of functional building blocks illustrating the implementation of specified functions and relationships thereof. The boundaries of these functional building blocks have been arbitrarily defined herein for the convenience of the description. Alternate boundaries may be defined as long as the specified functions and relationships (or equivalents thereof) are appropriately performed. Also, alternative aspects may perform functional blocks, steps, operations, methods, etc. using orderings different than those described herein.

References herein to "one aspect," "an aspect," "an example aspect," or similar phrases, indicate that the aspect described may include a particular feature, structure, or characteristic, but every aspect may not necessarily include the particular feature, structure, or characteristic. Moreover, such phrases are not necessarily referring to the same aspect. Further, when a particular feature, structure, or characteristic is described in connection with an aspect, it would be within the knowledge of persons skilled in the relevant art(s) to incorporate such feature, structure, or characteristic into other aspects whether or not explicitly mentioned or described herein. Additionally, some aspects may be described using the expression "coupled" and "connected" along with their derivatives. These terms are not necessarily intended as synonyms for each other. For example, some aspects may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

The breadth and scope of this disclosure should not be limited by any of the above-described exemplary aspects, but should be defined only in accordance with the following claims and their equivalents.

### Numbered aspects

By way of non-limiting example, some aspects of the disclosure are set out in the following numbered clauses.
Numbered Clause 1. A computer-implemented method for performing video processing in a camera, comprising:
   receiving, by at least one computer processor on the camera, a video frame comprising a first set of pixels;
   before compressing or encoding the received video frame, performing the video processing on the first set of pixels to generate a second set of pixels;
   compressing the second set of pixels; and
   causing the compressed second set of pixels to be displayed on a display device.
Numbered Clause 2. The computer-implemented method of Numbered Clause 1, wherein performing the video processing comprises:
   generating a reference frame based at least on one or more video frames received prior to the received video frame;
   determining a difference frame based on the reference frame and the received video frame;
   for each pixel of the difference frame, comparing a difference value of the pixel with a condition; and
   in response to the condition being met, generating the second set of pixels by:
      updating a value of a corresponding pixel in the first set of pixels based on the difference value and a factor; and
      updating a value of a neighboring pixel of the corresponding pixel in the first set of pixels.
Numbered Clause 3. The computer-implemented method of Numbered Clause 2, wherein comparing the difference value of the pixel with the condition comprises:
   comparing the difference value of the pixel with a threshold; and
   in response to the difference value being greater than or equal to the threshold:
      updating the value of a corresponding pixel in the first set of pixels based on the difference value and the factor; and
      updating the value of the neighboring pixel of the corresponding pixel in the first set of pixels.
Numbered Clause 4. The computer-implemented method of any preceding Numbered Clause, wherein performing the video processing comprises:
   generating a reference frame based at least on a previous video frame received a predetermined time prior to the received video frame;
   determining a difference frame based on the reference frame and the received video frame;
   for each pixel of the difference frame, comparing a difference value of the pixel with a condition; and
   in response to the condition being met, generating the second set of pixels by:
      updating a value of a corresponding pixel in the first set of pixels based on the difference value and a factor; and
      updating a value of a neighboring pixel of the corresponding pixel in the first set of pixels.
Numbered Clause 5. The computer-implemented method of any preceding Numbered Clause, wherein performing the video processing comprises:
   receiving a sum frame, wherein the sum frame comprises an addition of one or more video frames received prior to the received video frame;
   updating the sum frame by subtracting an oldest video frame from the sum frame and adding the received video frame, wherein the oldest video frame comprises a video frame with an oldest time index of the one or more video frames; and
   generating the second set of pixels by applying a transformation to the updated sum frame.
Numbered Clause 6. The computer-implemented method of any preceding Numbered Clause, further comprising:
   receiving a request to perform the video processing in the camera; and
   transmitting the compressed second set of pixels to a user device to be displayed on the display device associated with the user device.
Numbered Clause 7. The computer-implemented method of any preceding Numbered Clause, further comprising:
   compressing the first set of pixels; and
   transmitting the compressed first set of pixels and the compressed second set of pixels to a user device to be displayed on the display device associated with the user device.
Numbered Clause 8. A camera, comprising:
   one or more memories; and
   at least one processor each coupled to at least one of the one or more memories and configured to perform operations comprising:
      receiving a video frame comprising a first set of pixels;
      before compressing or encoding the received video frame, performing video processing on the first set of pixels to generate a second set of pixels;
      compressing the second set of pixels; and
      causing the compressed second set of pixels to be displayed on a display device.
Numbered Clause 9. The camera of Numbered Clause 8, wherein performing the video processing comprises:
   generating a reference frame based at least on one or more video frames received prior to the received video frame;
   determining a difference frame based on the reference frame and the received video frame;
   for each pixel of the difference frame, comparing a difference value of the pixel with a condition; and
   in response to the condition being met, generating the second set of pixels by:
      updating a value of a corresponding pixel in the first set of pixels based on the difference value and a factor; and
      updating a value of a neighboring pixel of the corresponding pixel in the first set of pixels.
Numbered Clause 10. The camera of Numbered Clause 9, wherein comparing the difference value of the pixel with the condition comprises:
   comparing the difference value of the pixel with a threshold; and
   in response to the difference value being greater than or equal to the threshold:
      updating the value of a corresponding pixel in the first set of pixels based on the difference value and the factor; and
      updating the value of the neighboring pixel of the corresponding pixel in the first set of pixels.
Numbered Clause 11. The camera of any of Numbered Clauses 8 to 10, wherein performing the video processing comprises:
   generating a reference frame based at least on a previous video frame received a predetermined time prior to the received video frame;
   determining a difference frame based on the reference frame and the received video frame;
   for each pixel of the difference frame, comparing a difference value of the pixel with a condition; and
   in response to the condition being met, generating the second set of pixels by:
      updating a value of a corresponding pixel in the first set of pixels based on the difference value and a factor; and
      updating a value of a neighboring pixel of the corresponding pixel in the first set of pixels.
Numbered Clause 12. The camera of any of Numbered Clauses 8 to 11, wherein performing the video processing comprises:
   receiving a sum frame, wherein the sum frame comprises an addition of one or more video frames received prior to the received video frame;
   updating the sum frame by subtracting an oldest video frame from the sum frame and adding the received video frame, wherein the oldest video frame comprises a video frame with an oldest time index of the one or more video frames; and
   generating the second set of pixels by applying a transformation to the updated sum frame.
Numbered Clause 13. The camera of any of Numbered Clauses 8 to 12, the operations further comprising:
   receiving a request to perform the video processing in the camera; and
   transmitting the compressed second set of pixels to a user device to be displayed on the display device associated with the user device.
Numbered Clause 14. The camera of any of Numbered Clauses 8 to 13, the operations further comprising:
   compressing the first set of pixels; and
   transmitting the compressed first set of pixels and the compressed second set of pixels to a user device to be displayed on the display device associated with the user device.
Numbered Clause 15. A non-transitory computer-readable medium having instructions stored thereon that, when executed by at least one computing device of a camera, cause the at least one computing device to perform operations comprising:
   receiving a video frame comprising a first set of pixels;
   before compressing or encoding the received video frame, performing video processing on the first set of pixels to generate a second set of pixels;
   compressing the second set of pixels; and
   causing the compressed second set of pixels to be displayed on a display device.
Numbered Clause 16. The non-transitory computer-readable medium of Numbered Clause 15, wherein performing the video processing comprises:
   generating a reference frame based at least on one or more video frames received prior to the received video frame;
   determining a difference frame based on the reference frame and the received video frame;
   for each pixel of the difference frame, comparing a difference value of the pixel with a condition; and
   in response to the condition being met, generating the second set of pixels by:
      updating a value of a corresponding pixel in the first set of pixels based on the difference value and a factor; and
      updating a value of a neighboring pixel of the corresponding pixel in the first set of pixels.
Numbered Clause 17. The non-transitory computer-readable medium of Numbered Clause 16, wherein comparing the difference value of the pixel with the condition comprises:
   comparing the difference value of the pixel with a threshold; and
   in response to the difference value being greater than or equal to the threshold:
      updating the value of a corresponding pixel in the first set of pixels based on the difference value and the factor; and
      updating the value of the neighboring pixel of the corresponding pixel in the first set of pixels.
Numbered Clause 18. The non-transitory computer-readable medium of any of Numbered Clauses 15 to 17, wherein performing the video processing comprises:
   generating a reference frame based at least on a previous video frame received a predetermined time prior to the received video frame;
   determining a difference frame based on the reference frame and the received video frame;
   for each pixel of the difference frame, comparing a difference value of the pixel with a condition; and
   in response to the condition being met, generating the second set of pixels by:
      updating a value of a corresponding pixel in the first set of pixels based on the difference value and a factor; and
      updating a value of a neighboring pixel of the corresponding pixel in the first set of pixels.
Numbered Clause 19. The non-transitory computer-readable medium of any of Numbered Clauses 15 to 18, wherein performing the video processing comprises:
   receiving a sum frame, wherein the sum frame comprises an addition of one or more video frames received prior to the received video frame;
   updating the sum frame by subtracting an oldest video frame from the sum frame and adding the received video frame, wherein the oldest video frame comprises a video frame with an oldest time index of the one or more video frames; and
   generating the second set of pixels by applying a transformation to the updated sum frame.
Numbered Clause 20. The non-transitory computer-readable medium of any of Numbered Clauses 15 to 19, the operations further comprising:
   receiving a request to perform the video processing in the camera;
   compressing the first set of pixels; and
   transmitting the compressed first set of pixels and the compressed second set of pixels to a user device to be displayed on the display device associated with the user device.

## Claims

1. A computer-implemented method for performing video processing in a camera, comprising:
receiving, by at least one computer processor on the camera, a video frame comprising a first set of pixels;
before compressing or encoding the received video frame, performing the video processing on the first set of pixels to generate a second set of pixels;
compressing the second set of pixels; and
causing the compressed second set of pixels to be displayed on a display device.

2. The computer-implemented method of claim 1, wherein performing the video processing comprises:
generating a reference frame based at least on one or more video frames received prior to the received video frame;
determining a difference frame based on the reference frame and the received video frame;
for each pixel of the difference frame, comparing a difference value of the pixel with a condition; and
in response to the condition being met, generating the second set of pixels by:
updating a value of a corresponding pixel in the first set of pixels based on the difference value and a factor; and
updating a value of a neighboring pixel of the corresponding pixel in the first set of pixels.

3. The computer-implemented method of claim 2, wherein comparing the difference value of the pixel with the condition comprises:
comparing the difference value of the pixel with a threshold; and
in response to the difference value being greater than or equal to the threshold:
updating the value of a corresponding pixel in the first set of pixels based on the difference value and the factor; and
updating the value of the neighboring pixel of the corresponding pixel in the first set of pixels.

4. The computer-implemented method of any preceding claim, wherein performing the video processing comprises:
generating a reference frame based at least on a previous video frame received a predetermined time prior to the received video frame;
determining a difference frame based on the reference frame and the received video frame;
for each pixel of the difference frame, comparing a difference value of the pixel with a condition; and
in response to the condition being met, generating the second set of pixels by:
updating a value of a corresponding pixel in the first set of pixels based on the difference value and a factor; and
updating a value of a neighboring pixel of the corresponding pixel in the first set of pixels.

5. The computer-implemented method of any preceding claim, wherein performing the video processing comprises:
receiving a sum frame, wherein the sum frame comprises an addition of one or more video frames received prior to the received video frame;
updating the sum frame by subtracting an oldest video frame from the sum frame and adding the received video frame, wherein the oldest video frame comprises a video frame with an oldest time index of the one or more video frames; and
generating the second set of pixels by applying a transformation to the updated sum frame.

6. The computer-implemented method of any preceding claim, further comprising:
receiving a request to perform the video processing in the camera; and
transmitting the compressed second set of pixels to a user device to be displayed on the display device associated with the user device.

7. The computer-implemented method of any preceding claim, further comprising:
compressing the first set of pixels; and
transmitting the compressed first set of pixels and the compressed second set of pixels to a user device to be displayed on the display device associated with the user device.

8. A camera, comprising:
one or more memories; and
at least one processor each coupled to at least one of the one or more memories and configured to perform operations comprising:
receiving a video frame comprising a first set of pixels;
before compressing or encoding the received video frame, performing video processing on the first set of pixels to generate a second set of pixels;
compressing the second set of pixels; and
causing the compressed second set of pixels to be displayed on a display device.

9. The camera of claim 8, wherein performing the video processing comprises:
generating a reference frame based at least on one or more video frames received prior to the received video frame;
determining a difference frame based on the reference frame and the received video frame;
for each pixel of the difference frame, comparing a difference value of the pixel with a condition; and
in response to the condition being met, generating the second set of pixels by:
updating a value of a corresponding pixel in the first set of pixels based on the difference value and a factor; and
updating a value of a neighboring pixel of the corresponding pixel in the first set of pixels.

10. The camera of claim 9, wherein comparing the difference value of the pixel with the condition comprises:
comparing the difference value of the pixel with a threshold; and
in response to the difference value being greater than or equal to the threshold:
updating the value of a corresponding pixel in the first set of pixels based on the difference value and the factor; and
updating the value of the neighboring pixel of the corresponding pixel in the first set of pixels.

11. The camera of any of claims 8 to 10, wherein performing the video processing comprises:
generating a reference frame based at least on a previous video frame received a predetermined time prior to the received video frame;
determining a difference frame based on the reference frame and the received video frame;
for each pixel of the difference frame, comparing a difference value of the pixel with a condition; and
in response to the condition being met, generating the second set of pixels by:
updating a value of a corresponding pixel in the first set of pixels based on the difference value and a factor; and
updating a value of a neighboring pixel of the corresponding pixel in the first set of pixels.

12. The camera of any of claims 8 to 11, wherein performing the video processing comprises:
receiving a sum frame, wherein the sum frame comprises an addition of one or more video frames received prior to the received video frame;
updating the sum frame by subtracting an oldest video frame from the sum frame and adding the received video frame, wherein the oldest video frame comprises a video frame with an oldest time index of the one or more video frames; and
generating the second set of pixels by applying a transformation to the updated sum frame.

13. The camera of any of claims 8 to 12, the operations further comprising:
receiving a request to perform the video processing in the camera; and
transmitting the compressed second set of pixels to a user device to be displayed on the display device associated with the user device.

14. The camera of any of claims 8 to 13, the operations further comprising:
compressing the first set of pixels; and
transmitting the compressed first set of pixels and the compressed second set of pixels to a user device to be displayed on the display device associated with the user device.

15. A non-transitory computer-readable medium having instructions stored thereon that, when executed by at least one computing device of a camera, cause the at least one computing device to perform the method of any of claims 1 to 7.
